# EUROPEAN PATENT APPLICATION

(11) **EP 0 825 382 A1**
(43) Date of publication of application: **25.02.1998**
(21) Application number: 96912275.3
(22) Date of filing: 26.04.1996
(51) Int. Cl.: F23G 5/027, F23G 5/16

(54) **WASTE HEAT TREATMENT APPARATUS**

(30) Priority: 28.04.1995 JP 105191/95; 19.09.1995 JP 239940/95
(71) Applicant: KOMATSU LTD., Minato-ku Tokyo 107 (JP)
(72) Inventor: KADOTANI, Kanichi, Technical Inst. of Komatsu Ltd., Kanagawa-ken 254 (JP); TANIMURA, Toshinobu, Technical Inst. Komatsu Ltd, Kanagawa-ken 254 n 254 (JP); IMAIZUMI, Hisaakira, Technical Inst. Komatsu Ltd., Kanagawa-ken 254 (JP)
(74) Representative: Grünecker, Kinkeldey, Stockmair & Schwanhäusser Anwaltssozietät
(86) International application number: JP9601173
(87) International publication number: WO9634231

(57) **Abstract**

A waste heat treatment apparatus comprising a thermal decomposition furnace (30) provided with a gas outlet (31), a waste charge port (35) having an opening and closing door (34), and an openable hearth (33), and a combustion furnace (41) shaped to surround the thermal decomposition furnace and having a combustion apparatus (47) which uses at least one of a fuel from a fuel supply apparatus and a carbonized gas from the gas outlet. The combustion furnace has a double construction such that a peripheral wall (30a) of the thermal decomposition furnace and an intermediate wall (42) define a combustion passage (43), the intermediate wall and an outer wall (44) define a dilution air passage (45), the combustion apparatus is connected on an upstream side thereof to a combustion air supply pipe (48a) and on a downstream side thereof to an exhaust passage (50), and the dilution air passage is connected on an upstream side thereof to a dilution air supply pipe (48b) and is connected to the combustion passage.

## Description

### TECHNICAL FIELD

The present invention relates to a system for thermally processing a waste in which the waste is thermally decomposed into a dry distilled gas (a gas generated by a dry distillation) and a thermally decomposed residue (a residue generated by a thermal decomposition) and in which the above mentioned dry distilled gas is utilized as a heat source for effecting a thermal decomposition as mentioned above while permitting the above mentioned thermally decomposed residue to be melted so as to yield a processed waste of an extremely small size, and further in which a waste heat produced is effectively utilized and recycled.

### BACKGROUND ART

As a waste thermo-processing system of dry distilled gas recycling type in which a waste is thermally decomposed to extract therefrom a dry distilled gas (i. e. a gas generated by a thermal decomposition) that is utilized as a fuel for the purpose of heating the above mentioned waste , there has hitherto been known what is disclosed in Japanese Unexamined Patent Publication No. Sho 56-165817.

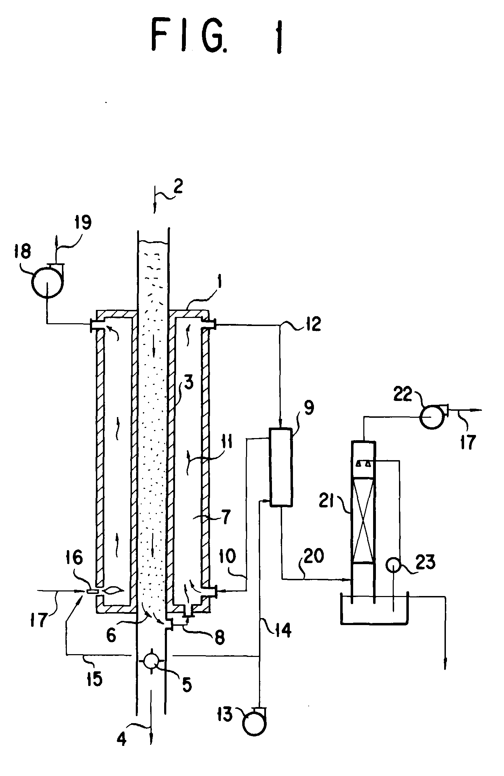

Such a waste thermo-processing system of dry distilled gas recycling type in the prior art is so constructed as shown in Fig. 1 of the drawings attached hereto. A thermo-decomposition furnace 1 has an inner cylinder 3 centrally passed therethrough for receiving a waste 2 at its upper inlet and permitting the waste 2 to be displaced downwards as a moving mass while allowing the latter to be heated indirectly from an outside as it is so displaced. And the said inner cylinder 3 has attached thereto at an lower side thereof an exhaust valve 5 adapted to discharge a thermally decomposed residue 4 out of the said furnace 1 and a conduit 8 for feeding a thermally decomposed gas 6 then generated to a heating chamber 7 in the said thermo-decomposition furnace 1. The said heating chamber 7 has connected at its lower end an air supply pipe 10 for introducing there an air from an air preliminarily heating unit 9.

Also, the said heating chamber 7 has attached thereto at an upper portion thereof a gas pipe or line 12 for feeding a partially burning decomposed gas 11 to the said air preliminarily heating unit 9.

An air that is for the purpose of a partial combustion is fed from an air fan 13 through a conduit 14 to the said air preliminarily heating unit 9. Also, the said air fan 13 is adapted to feed an air for the purpose of a complete combustion through a conduit 15 to a lower part of the said heating chamber 7. At the said lower part the heating chamber 7 has attached thereto at a burner 16, to which is fed a combustible refined gas through a gas pipe 17. Also, the said heating chamber 7 has attached thereto at an upper part thereof an exhaust gas fan 18 by means of which an exhaust gas 19 is discharged.

A partially burnt decomposed gas that has passed through the said air preliminarily heating unit 9 is led through a gas pipe 20 to a lower part of a gas washing tower 21. At an upper part thereof the said gas washing tower 21 has attached thereto a thermo-decomposition gas fan 22 by means of which a refined gas is fed into the said gas pipe 17. Also attached to the said gas washing tower 21 is a circulation pump 23.

In the above mentioned waste thermo-processing system of dry distilled gas recycling type in the prior art, it should be noted, however, that the said heating chamber 7 of the combustion furnace 1 which is designed to have the said inner cylinder 3 heated externally therearound is configured to be a space that is toroidal in cross section. Since the said burner 16 is disposed on one (lower) side of the said space and thus offset therein, it has been found to be unavoidable for a combustion to be effected in a state localized on that side, thus creating an unbalance in the burning load within the combustion chamber 7 and making less durable the said furnace 1 at a localized portion at which the said burner 16 is provided.

With the above mentioned conventional system, it has also be noted that since the exhaust gas which contains a plenty of thermal energy is emitted as it is to the atmosphere, the problem has arisen that the heat efficiency is poor.

With the foregoing problems taken into account, it is an object of the present invention to provide, in a waste thermo-processing system in which a dry distilled gas that is generated in a thermo-decomposition furnace is recycled for heating the waste in the said thermo-decomposition furnace, an improvement in which the burning load in a combustion furnace constructed so as to surround the said thermo-decomposition furnace can be uniformed for the said combustion furnace as a whole, the durability of the combustion furnace that is elevated in the burning temperature can be enhanced, and yet a combustion as desired can be effected at an extremely high burning efficiency.

It is another object of the present invention to provide a waste thermo-processing system which enables a waste that is heated in the above mentioned combustion furnace and is then carbonization dry distilled to be further melted to render a waste residue after the thermo-processing extremely small, and in which the heating within a melting furnace in order to dissolve the waste can be efficiently carried out by way of well utilizing a heat that is generated in a dry distillation process as mentioned above and an electric power that is thermo-electrically generated with the use of an exhaust gas.

It is a further object of the present invention to provide a waste thermo-processing system which enables an exhaust heat from the said combustion furnace and the said melting furnace to be effectively utilized.

### SUMMARY OF THE INVENTION

In order to achieve the object mentioned above, there is provided in accordance with the present invention, in a first general form of embodiment thereof, a system for thermally processing a waste, which comprises:
a thermo-decomposition furnace that is provided with a gas outlet, a waste inlet having an openable and closable door for receiving the waste, and an openable and closable hearth; and
a combustion furnace that is configured so as to surround the said thermo-decomposition furnace and that is provided with a burning unit with a fuel which is constituted by at least one of a fuel furnished from a fuel supply unit and a dry distilled gas furnished from the said gas outlet,
   characterized in that:
the said combustion furnace is double structured, defining a combustion passageway with a peripheral wall of the said thermo-decomposition furnace and an intermediate wall and a diluting air passageway with the said intermediate wall and an external wall;
the said burning unit is disposed within the said combustion passageway;
the said combustion passageway has an upstream side connected to a combustion air supply line and a downstream side connected to an exhaust passageway; and
the said diluting air passageway has an upstream side connected to a diluting air supply line and has a communication with the said combustion passageway.

And, in this general form of embodiment, it is desirable that there should be further provided a fuel supply amount control unit for reducing the amount of supply of the said fuel from the said fuel supply inlet into the said burning unit in accordance with the amount of the said dry distilled gas that is generated.

According to these constructions, it can be seen that a predetermined amount of the waste will be charged into the said thermo-decomposition furnace. And, in a state in which the said thermo-decomposition furnace is tightly sealed, the said combustion furnace will be supplied with a fuel to carry out a combustion as desired. A burnt gas then generated will be discharged through the said combustion passageway into the said exhaust passageway while in the meantime the said thermo-combustion furnace that constitutes an inner wall of the said combustion passageway will be externally heated.

Since the said combustion passageway is then supplied over its entirety with a diluting air from the said diluting air passageway, a favorable burning action will be performed throughout the said entire combustion passageways.

Further, as the said thermo-decomposition furnace is elevated in temperature, the said waste will give rise gradually to a said dry distilled gas that will then be flushed out of the said gas outlet. Being combustible, the said dry distilled gas will immediately be burnt at the said burning unit, and will then provide a part of the heat that is produced in the said combustion furnace. At this instance it should be noted that the amount of the said fuel which is being supplied from the said fuel supply unit will be reduced by an amount of the above mentioned dry distilled gas being generated.

Thus, it follows that the burning load in the said combustion furnace constructed so as to surround the said thermo-decomposition furnace can be uniformed for the said combustion furnace as a whole, the durability of the thermo-combustion furnace that is elevated in the burning temperature can be enhanced, and yet a combustion as desired can be effected at an extremely high burning efficiency.

In the above mentioned construction, it is possible for the said gas outlet to be connected either at a downstream side or at an upstream side of the said burning unit in the said combustion passageway.

Also, it is preferable that the said diluting air passageway and the said combustion passageway should have a portion of communication between them, which is constituted by a multiplicity of vent holes.

Also, in the above mentioned construction, it is desirable that there should further be provided a melting furnace that is constituted of: an openable and closable hearth that is located downwards of the said thermo-decomposition furnace and is surrounded by the said combustion passage; a heating unit that is disposed in opposition to the said hearth; and a side wall that is arranged so as to surround the said heating unit to face the said combustion passage and is composed of a high temperature heat storage material.

According to the construction mentioned in the preceding paragraph, it should be noted that a residue that is produced from the said waste as a result of dry distillation thereof will be dissolved by heating in the said melting furnace. At this instance it can be seen that the said melting furnace will, through the said high temperature heat storage material that constitutes the said side wall thereof, be effective to absorb an amount of heat that is produced in the said combustion passageway of the above mentioned burning unit and will provide a heating action with the combustion heat of a burner and the heat generated by an electrical heating unit that may constitute the said burning unit.

Thus, it can be seen that the waste which has been heated in the above mentioned combustion furnace and has been carbonization dry distilled in the thermo-decomposition furnace will be dissolved to yield a residue of the waste that is of an extremely small volume, and yet a heating step desired within the said melting furnace can be carried out efficiently by well utilizing the heat in the above mentioned dry distillation process.

In order to achieve the second object mentioned above, there is also provided in accordance with the present invention, in a second general form of embodiment, a system for thermally processing a waste, which comprises:
a thermo-decomposition furnace with a waste receiving case that is capable of insertion and retraction; and
a combustion furnace that is configured so as to surround the said thermo-decomposition furnace and that is provided with a burning unit with a fuel which is constituted by at least one of a fuel furnished from a fuel supply unit and a dry distilled gas furnished from the said gas outlet,
   characterized in that:
the said combustion furnace is double structured, defining a spatial portion and a combustion passageway continuous to the said spatial portion with a peripheral wall of the said thermo-decomposition furnace and an intermediate wall and a diluting air passageway with the said intermediate wall and an external wall;
the said burning unit is disposed within the said spatial portion;
a combustion air supply blower is connected to the said burning unit;
the said combustion passageway has a downstream side connected to an exhaust passageway; and
the said diluting air passageway has an upstream side connected to a diluting air supply blower and has a communication with the said spatial portion and the said combustion passageway.

Also, in the above mentioned construction as well, it is desirable that there should further be provided a fuel supply amount control unit for reducing the amount of supply of the said fuel from the said fuel supply unit into said burning unit in accordance with the amount of the said dry distilled gas that is generated.

Also, in the above mentioned construction as well, it is desirable that the said diluting air passageway and the said combustion passageway should have a portion of communication between them which is constituted of a multiplicity of vent holes.

Also, in either of the construction according to the above mentioned first general form of embodiment and the construction according to the above mentioned second general form of embodiment of the present invention, it is possible that there may further be provided a thermo-electric power generator that is disposed in the said exhaust passageway for obtaining an electric power and warm water by utilizing a difference in temperature between the exhaust gas passing through the said exhaust passageway and a coolant.

Further, it is desirable that there should further be provided a power supply unit that is constituted by a power source with the said electric power obtained by the said thermo-electric power generator and that is connected to an electrical driving part and an electrical thermal source part of each of components which constitute the said system.

According to these constructions mentioned above, it should be noted that the burnt gas in the said combustion passageway of the burning unit will be allowed to be exhausted through the said exhaust passageway while in the mean time the heat will be absorbed by the said thermoelectric power generator disposed in the said exhaust passageway and will thereby be utilized to generate an electric power and to warm water.

And, the electric power then generated by the said thermo-electric power generator can be utilized to prove an electric power for the thermo-processing waste system.

Thus, an exhaust heat from each of the above mentioned combustion furnace and the above mentioned melting furnace will be effectively utilized to provide an electric power and to warm water. And, especially in a case where the exhaust heat is converted to an electric power, it will be seen that by permitting a power supply unit with the said electric power to be utilized as an electric power source for each of components which constitute the waste thermo-processing system, the electric power that is needed for the said thermo-processing waste system can be self-serviced, thereby markedly enhancing the energy saving rate in the system.

Further, in either the construction according to the above mentioned first general embodiment or the construction according to the above mentioned second embodiment of the present invention, it is desirable that the said burning unit should be surrounded by the said exhaust passageway.

### BRIEF EXPLANATION OF THE DRAWINGS

The present invention will better be understood from the following detailed description and the drawings attached hereto showing certain illustrative embodiments of the present invention. In this connection, it should be noted that such embodiments as illustrated in the accompanying drawings are intended in no way to limit the present invention, but to facilitate an explanation and an understanding thereof.

In the accompanying drawings:
Fig. 1 is an explanatory view that illustrates the conventional waste thermo-processing system in which a dry distilled gas is recycled;
Fig. 2 is a constructive explanatory view that diagrammatically illustrates a certain embodiment of the waste thermo-processing system according to the present invention;
Fig. 3 is a constructive explanatory view that diagrammatically illustrates another example, as enlarged, of a burning unit section of the above mentioned embodiment of the present invention;
Fig. 4 is an explanatory view that illustrates the state in which an output electric power of a thermo-electric power generator in the above mentioned embodiment of the present invention is utilized: and
Fig. 5 is a constructive explanatory view that illustrates another embodiment of the waste thermo-processing system according to the present invention.

### BEST MODES FOR CARRYING OUT THE INVENTION

Hereinafter, suitable embodiments of the present invention with respect to a thermo-processing waste system will be set forth with reference to the accompanying drawings hereof.

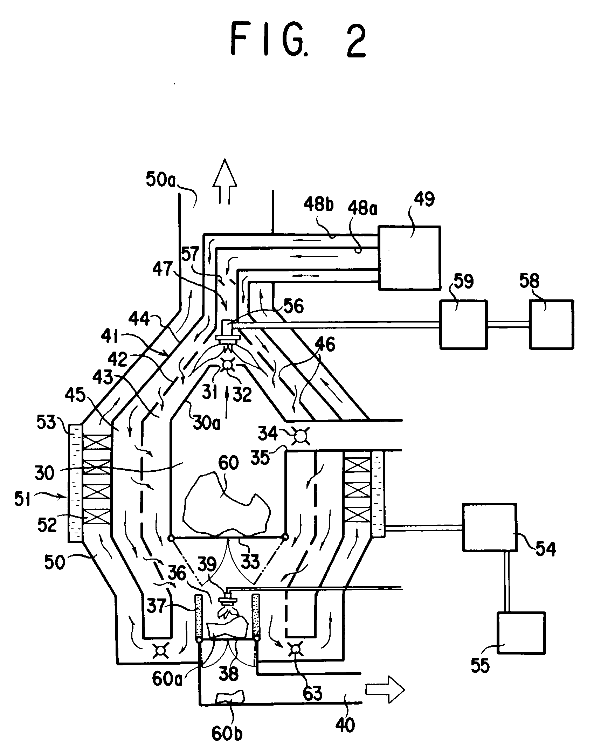

An explanation will first be given of a certain embodiment of the present invention with reference to Figs. 2 to 4.

In Fig. 2, there is shown a thermo-decomposition furnace 30 which comprises a conical upper portion that is tapered upwards and cylindrical body portion and which is provided at its top with gas outlet 31, which is in turn provided with a pressure control valve 32 that is adapted to be opened when the pressure within the said thermo-decomposition exceeds a predetermined pressure level.

Also, the said thermo-decomposition furnace 30 is provided at a bottom thereof with a hearth 33 that is openable downwards and at a side thereof with a waste inlet 35. The said hearth 33 and the said door 34 are adapted to be closed to hermetically seal the said thermo-decomposition furnace 30.

A melting furnace 36 is disposed downwards of the said hearth of the above mentioned thermo-decomposition furnace 30. The said melting furnace 36 comprises a peripheral heated wall 37, a hearth 38 that is openable downwards and a heat source 39 such as a burner disposed above the said hearth 38. The said melting furnace 36 is provided at a lower part thereof with a molten take-up 40.

It should ne noted that the said two hearths 33 and 38 are each designed to be opened and closed externally.

Outside of the above mentioned thermo-decomposition furnace 30 so as to surround it there is provided a combustion furnace 41 that is coaxial therewith and is similar in shape thereto. The said combustion furnace 41 is double structured, defining a combustion passageway 43 with a peripheral wall 30a of the said thermo-decomposition furnace 30 and an intermediate wall 42 and a diluting air passageway 45 with the said intermediate wall 42 and an external wall 44. And, the said intermediate wall 42 over its entire area is formed therethrough a multiplicity of vent holes 46 for supplying an air from the said diluting air passageway 45 into the said combustion passageway 43. The above mentioned gas outlet 31 of the thermo-decomposition furnace 30 is arranged in opposition to an upper part of the said combustion furnace 41.

At an upper end portion of the above mentioned combustion furnace 41 and at an upstream part of the said combustion passage 43 there is provided a burning unit 47 oriented downwards. Also, the said burning unit 47 has an upper section connected to a combustion air supply line 48a. Also, the above mentioned diluting air passageway 45 has an upstream side connected to a diluting air supply line 48b. And, an air supply control amount control unit 49 for controlling the amount of supply of an air is connected to the said two air supply lines 48a and 48b.

The said diluting air passageway 45 of the above mentioned combustion furnace 41 is dead-ended downwards so that the total amount of the air supplied to the said diluting air passageway 45 may be supplied through the said vent holes 46 into the said combustion passageway 43.

On the other hand, the said combustion passageway 43 is bent around an area where it passes around the periphery of the said melting furnace 36 and is then turned upwards and thereafter communicates with the said exhaust passageway SO disposed around and outside of the said diluting air passageways 45 of the above mentioned combustion furnace 41 so as to surround it.

And, the said exhaust passageway 50 is provided therein with a thermo-electric generator 51 for producing an electric power by utilizing a waste heat in the exhaust gas within the said exhaust passageway 50. The said thermo-electric generator 51 makes use of the Peltier effect with a number of thermo-electric elements 52, each of which has one end cooled by a coolant passageway 53 and the other end exposed to the said exhaust passageway 20 to produce an electric power due to a difference in temperature between the said two ends, thus a difference in temperature between the coolant and the exhaust gas.

The above mentioned coolant passageway 53 is connected to a cooling water circulation unit 54 so that the coolant (i. e. cooling water) that has absorbed a heat and is thus elevated in temperature may be fed to a warm water utilization section 55 such as a warm water supply unit or a heating system.

The said burning unit 47 disposed at the upper part of the said combustion furnace 41 is structured to include a burner 56 disposed as oriented towards a downstream side of the said combustion passageway 43 in the upstream part thereof. And, the upstream side of the said burner 56 is connected via a swirler 57 to the said combustion air supply line 48a. The said burner 56 is connected to a fuel supply unit 59 that is controlled by a supply amount control unit 58.

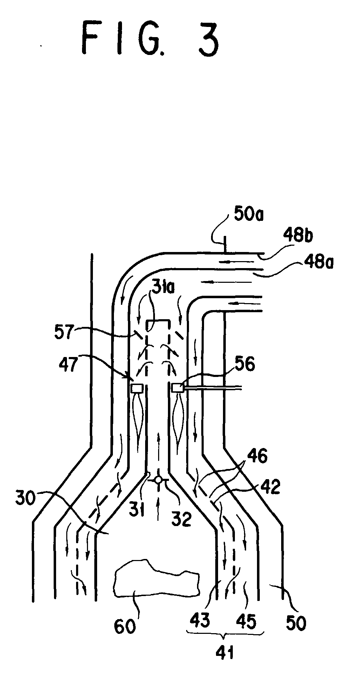

It should be noted at this point that as shown in Fig. 3, the downstream side of the said pressure control valve 32 in the said gas outlet 31 of the above mentioned thermo-decomposition furnace 30 may be connected via a downwards oriented communication holes 31a to the upstream side of the said burning unit 47. In this case, it can be seen that the air passing within the said air supply line 48b will create an air layer on the inner wall surface of the said air supply line 48b, thereby bringing about an effect to protect the inner wall of the said air supply line 48b not to suffer from an overheat by the said burner 56.

The said heated wall 37 around the said melting furnace 36 as well as the said hearth 38 is composed of a heat resistant material such as a ceramic and is constructed by a high temperature heat storage material being porous and having an air permeability so that the heat at the downstream side of the said combustion furnace 41 may be entered into the said melting furnace 36.

A control valve 63 is disposed at the downstream end of the said combustion furnace 41, thereby controlling the amount of waste heat in the said exhaust passageway 50 of the combustion furnace 41.

An explanation will be given below of the operation in the waste thermo-processing system of the above mentioned construction.

First of all, a waste 60 in a predetermined amount will be charged into the said thermo-decomposition furnace 30, whereafter the said inlet door 34 is tightly closed to hermetically seal the said furnace 30. It can be seen that at this instance the said pressure control valve 32 disposed at the top of the thermo-decomposition furnace 30 is closed.

The operation of the said burning unit 47 is then initiated or alternatively may have been already initiated since prior to the charging the waste 60 for a preliminary heating thereof. At the beginning of its operation a combustion at the said burning unit 47 will be carried out by supplying the said burner 56 with a fuel (i. e. a gaseous fuel or liquid fuel) furnished from the said fuel supply unit 59. At this instance, an air will be supplied from both the said combustion and the said diluting air supply line 48a and 48b. The combustion air will be swirled by the said swirler 57 and then supplied into the said combustion furnace 47.

A gas that has been burnt by a combustion in the said burning unit 47 will pass through the said combustion passageway 43 of the combustion furnace 41 and around the said melting furnace 36 and will then be discharged through the said exhaust passageway 50 and through an exhaust outlet 50a. In the instance, the air (including oxygen) for a primary combustion by the said burning unit 47 will be supplied from the said combustion air supply line 48a. And, the air for a secondary combustion within the said combustion passageway 43 of the combustion furnace 41 will be supplied through the said vent holes 46 from the said diluting air passageway 45 that is connected to the said diluting air supply line 48b.

Then, the space within the said thermo-decomposition furnace 30 will be heated via the side wall thereof by way of a combustion of the fuel in the said combustion furnace 41 so that the waste 60 contained within the tightly sealed space thereof may be heated and dry distilled. And, when the temperature within the said thermo-decomposition furnace 30 exceeds 300°C, an inflammable dry distilled gas will be produced from the said waste 60. And, when the pressure within the said thermo-decomposition furnace 30 by way of the production of the said dry distilled gas exceeds a predetermined pressure level, the said pressure control valve 32 will be opened so that the dry distilled gas within the thermo-decomposition furnace 30 may be fed into the said burning unit 47 via the said gas outlet 31 provided at the top of the said furnace 30.

The above mentioned dry distilled gas will be supplied directly below the said burner 56 of the burning unit 47 in the embodiment shown in Fig. 2 and will be supplied towards an upstream side of the said burning unit 47 via the said communicating holes 31a in the embodiment shown in Fig. 3, and a mixture thereof with a combustion air furnished from the said combustion air supply line 48a will be burnt at the said burner 56, together with the fuel that is being furnished thereto. And, in accordance with the amount of the said dry distilled gas, the amount of the fuel from the said fuel supply unit 59 to the said burner 56 will be reduced. Also, when the amount of the said dry distilled gas is increased, even a state may develop in which the amount of supply of the fuel from the said fuel supply unit 59 to the said burner 56 is reduced to the zero so that a combustion there may be effected with the said dry distilled gas alone.

The above mentioned gaseous combustion due to the combustion of the fuel and the dry distilled gas in the said burning unit 47 is followed by a secondary gaseous combustion in the said combustion passageway 43. Then, since the air is supplied from the said diluting air passageway 45 via the said vent holes 46 in the entire periphery of the said combustion passageway 43, the burnt gas within the said combustion passageway 43 will be completely burned. As a result, since a substantially even combustion takes place within the said combustion passage 43 as a whole, a damage of the said combustion furnace 41 that may have arisen due to a local overheat therein will here be prevented.

The supply of the fuel from the said fuel supply unit 59 into the said burner 56 of the burning unit 47 will be controlled in accordance with the amount of the said dry distilled gas that is produced from the said thermo-decomposition furnace 30. The amount of production of the said dry distilled gas will be ascertained by detecting the pressure within the said thermo-decomposition furnace 30.

As mentioned above, the waste 60 within the said thermo-decomposition furnace 30 will be dry distilled and the dry distilled gas will be discharged therefrom. And, as a carbonization of the said waste proceeds while reducing the amount of the said dry distilled gas that is produced, the pressure then prevailing within the said thermo-decomposition furnace 30 will be reduced. The said pressure control valve 32 will then be closed to terminate a dry distillation process as mentioned above.

After the termination of the said dry distillation process, opening the said hearth 22 will cause a residue 60a of the thermal decomposition of the waste 60 carbonized to fall into and to be received in the said melting furnace 36. And, the said thermally decomposed and carbonized residue 60a will be dissolved in the said melting furnace 36 by further heating to 1200 °C or more there.

The said melting furnace 36 will be heated by an additional heat applied from the said heat source 39 such as a burner and by a storage heat due to the absorption of a heat from the said combustion furnace 41 in the above mentioned dry distilled process. In this instance, the heated wall 37 and the hearth 38 of the said melting furnace 36 are each composed of a high temperature heat storage material and will be sufficiently elevated in temperature by the above mentioned heating means. It should be noted at this point that the above mentioned heat source 39 is located at a position not to disturb the fall of the said thermally decomposed residue 60a or alternatively is arranged so as to be displaceable in a direction that is transverse to the direction of the said fall.

A molten product 60b that results from a dissolution of the residue 60a in the said melting furnace 36 will, by opening the said hearth 38, be discharged into the said molten product take-out 40 and will be removed from there to the outside.

An exhaust gas that is produced as a result of the burning operation in each of the said dry distillation process and a melting process as mentioned above will be discharged through the said exhaust passageway 50. And, an exhaust heat that is within the said exhaust passageway 50 will be utilized as converted to produce an electric power to warm water.

In the above mentioned embodiment of the present invention, it should be noted that while the said thermo-electric power generator 51 is shown as being disposed along an outer wall of the said diluting air passageway 45, it may be disposed at a downstream side of the said exhaust outlet 50a.

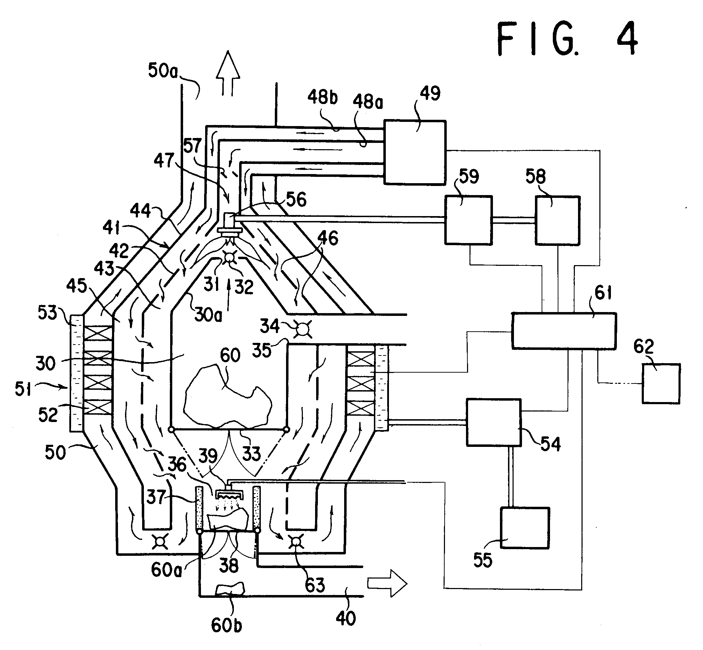

Fig. 4 shows an example of the state of utilization of the electric power that is produced in the above mentioned thermo-electric power generator 51. In this example, the said thermo-electric elements 52 of the thermo-electric power generator 51 is connected to a power supply unit so that the electric power produced in the thermo-electric power generator 51 may be converted at the said power supply unit 61 to an electric power that is available. And, a configuration is adopted here in which an electric power from the said power supply unit 61 may be supplied to each of the said air supply amount control unit 49, the said water coolant circulation unit 54, the said fuel supply amount control unit 58 and the said fuel supply unit 59 via a respective electric power feed line.

Also, in a case where the heat source 39 of the said melting furnace 36 is constituted by an electric heating unit such as a halogen lump, an electric power will be furnished thereto from the above mentioned power supply unit via an additional electric power feed line.

Also, in Fig. 4, it should be noted that numeral 62 designates an external unit that is independent of the system according to the present invention and that such an external unit 62 may be furnished with an electric power produced in the above mentioned electric power generator 61.

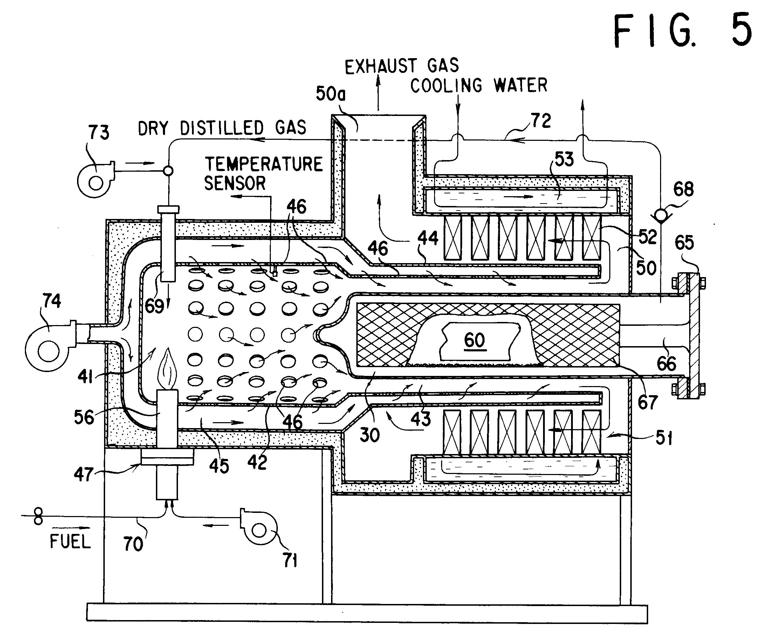

Fig. 5 shows another embodiment of the present invention. In this form of embodiment, there is employed a transverse axial type of the system which also omits a melting furnace section. In explaining this embodiment, a description will be made in which the same components as those in the construction shown in Fig. 4 are designated by the same reference numerals and their explanation will be omitted.

In this embodiment, a said thermo-decomposition furnace 30 as well as a said combustion furnace 41 is disposed transversely, The said thermo-decomposition furnace 30 has one end closed with a cover 65 to tightly seal the space therein. The said cover 65 has attached thereto via a support member 66 a waste case 67 which is in the form of a basket made up of a net material and which is capable of being inserted into and retracted from the said thermo-decomposition furnace 30 by the attachment and detachment of the said cover 65.

The said waste case 67 is constructed so as to be capable of being opened and closed and is adapted to be furnished with a waste 60 or to allow a thermally decomposed residue to be removed therefrom in a state in which it is taken out of the said thermo-decomposition furnace 30.

The said combustion furnace 41 arranged to surround the said thermo-decomposition furnace 30 is provided at a forward end side of the said thermo-decomposition furnace 30 with a large space, the inner side of which is in turn provided with a said burner 56 that constitutes a said burning unit 47, and a dry distilled gas flushing portion 69 for feeding into the said space a dry distilled gas from the said thermo-decomposition furnace 30 via a pressure valve 68.

A fuel supply line 70 and a blower 71 for feeding a combustion air are connected to the said burner 56. Also, a further blower 73 is connected to a dry distilled gas passageway 72 that is connected to the above mentioned dry distilled gas flushing portion 69.

A said intermediate wall 42 of the said combustion furnace 41 is formed with a multiplicity of vent holes 46 so that the air flowing from a blower 74 into a said diluting air passage 45 outside of the combustion furnace 41 may be caused to flow in a swirling flow into a said inner combustion passageway 43. A said exhaust passageway 50 leading from the said combustion passageway 43 to a said exhaust outlet 50a is provided with a said number of thermo-electric elements 52 of a said therm-electric power generator 51, and an outside of the said thermo-electric power generator 51 is surrounded by a said coolant passageway 53 through which a said cooling water is circulated.

In the construction mentioned above, the waste 60 as it is contained in the said waste case 67 will be tightly sealed in the said thermo-decomposition furnace 30.

In this state will the said burning unit 47 be operated. At the beginning the said burning unit 47 at the said burner 56 will be operated with a fuel (i. e. a gaseous fuel or a liquid fuel) that is furnished from a fuel supply line 70. In this instance, the air for both the combustion and the dilution will be supplied from the said blower 74. The said diluting air will be caused to flow from the said diluting air passage 45 through the said vent holes 46 to promote a combustion as desired. It should also be noted that the outer wall and the intermediate wall 42 of the said combustion furnace 41 will be prevented by the said diluting air from being elevated in temperature in excess of a predetermined temperature level.

It can thus be seen that the above mentioned diluting air will be caused to flow from the said vent holes 46 in a swirling flow into the said combustion furnace 41 in which a combustion may therefore not be localized and can therefore be substantially evenly effected within the said combustion passageway 43, thereby preventing a localized overheat and any damage of the said combustion furnace 41 due to such an overheat.

A burnt gas that results from the combustion of the fuel in the said combustion furnace 41 will be permitted to flow through the said combustion passageway 43 of the combustion furnace 41 and will then be exhausted towards the said discharge outlet 50a.

The space within the said thermo-decomposition furnace 30 will be heated via the side wall thereof by the combustion of the fuel in the said combustion chamber 41, and the waste 60 therein be thermally dry distilled within the said tightly sealed space. And, when the space is elevated in temperature in excess of 300 °C , the heated waste 60 will give rise to an inflammable dry distilled gas, and when the pressure within the said thermo-decomposition furnace 30 is thereby elevated in pressure in excess of a predetermined pressure level, the said pressure valve 68 will be opened. This will cause the dry distilled gas within the thermo-decomposition furnace 30 to be supplied through the said gas flushing portion 69 provided at the innermost region of the said combustion furnace 41 apart from the thermo-decomposition furnace 30 into the said burning unit 47 and to be burnt there.

The supply of the fuel into the said burner 56 that constitutes the said burning unit 47 will be controlled in accordance with the amount of the said dry distilled gas that is produced from the said thermo-decomposition furnace 30. And, as the amount of the dry distilled gap that is produced is increased, even a state may develop in which the amount of the fuel supplied to the said burner 56 may be reduced to the zero and only the said dry distilled gas may be burnt there. The amount of the dry distilled gas that is produced can be ascertained by detecting the pressure within the said thermo-decomposition furnace 30.

The waste 60 that has been dry distilled and has been carbonized will be disposed of, after the said case 67 that contains the same is removed from the said thermo-decomposition furnace 30.

An exhaust heat contained in an exhaust gas that has passed through the above mentioned exhaust passageway 50 will, as converted, be utilized to produce an electric power and to warm water.

Thus, as set forth in the foregoing description, a waste thermo-processing system of the construction according to the present invention, in which a dry distilled gas that has been produced in a thermo-decomposition furnace is recycled to heat a waste in the said thermo-decomposition furnace, will enable a burning load in a combustion furnace that is constructed to surround the said thermo-decomposition furnace to be uniformed as a whole, the durability of the said combustion furnace for effecting a combustion as desired at an elevated temperature as required to be markedly enhanced, and yet the waste to be burnt at an extremely high combustion efficiency.

Also, a waste thermo-processing system of the construction according to the present invention, will enable a waste that has been heated in a combustion furnace as mentioned above and has been carbonaceously dry distilled to be further dissolved to yield a residue that is of an extremely small size after the thermal processing operations, and yet is capable of carrying out an efficient heating action in a melting furnace in order to dissolve the waste in a manner such as to well utilize the heat in a dry distillation process as mentioned above.

Furthermore, an exhaust heat from both a combustion furnace and melting furnace as mentioned above can be effectively utilized to warm water and to produce an electric power. And, especially in a case where such an exhaust heat is converted to an electric power, a power supply unit can be provided with the said electric power as has been converted to for electrically energizing various components of the instant waste thermo-processing system so that the system itself can be self-served as to electric powers as required and hence can be a system in which the energy saving capability is highly enhanced.

While the present invention has hereinbefore been thereof, it will readily be appreciated by a person skilled in the art to be obvious that many alterations thereof, omissions therefrom and additions thereto can be made without departing from the essence and the scope of the present invention. Accordingly, it should be understood that the present invention is not limited to the specific embodiments thereof set out above, but includes all possible embodiments thereof that can be made within the scope with respect to the features specifically set forth in the appended claims and encompasses all equivalents thereof.

## Claims

1. A system for thermally processing a waste, comprising:
a thermo-decomposition furnace that is provided with a gas outlet, a waste inlet having an openable and closable door for receiving the waste, and an openable and closable hearth; and
a combustion furnace that is configured so as to surround said thermo-decomposition furnace and that is provided with a burning unit with a fuel which is constituted by at least one of a fuel furnished from a fuel supply unit and a dry distilled gas furnished from said gas outlet,
characterized in that:
said combustion furnace is double structured, defining a combustion passageway with a peripheral wall of said thermo-decomposition furnace and an intermediate wall and a diluting air passageway with said intermediate wall and an external wall;
said burning unit is disposed within said combustion passageway;
said combustion passageway has an upstream side connected to a combustion air supply line and a downstream side connected to an exhaust passageway; and
said diluting air passageway has an upstream side connected to a diluting air supply line and has a communication with said combustion passageway.

2. A system for thermally processing a waste, as set forth in claim 1, characterized in that said gas outlet is connected at a downstream side of said burning unit in said combustion passageway.

3. A system for thermally processing a waste, as set forth in claim 1, characterized in that said gas outlet is connected at an upstream side of said burning unit in said combustion passage.

4. A system for thermally processing a waste, as set forth in claim 1, characterized in that said diluting air passageway and said combustion passageway has a portion of communication between them, which is constituted by a multiplicity of vent holes.

5. A system for thermally processing a waste, as set forth in claim 1, characterized in that there is further provided a melting furnace that is constituted of:
an openable and closable hearth that is located downwards of said thermo-decomposition furnace and at a position at which it is surrounded by said combustion passage;
a heating unit that is disposed in opposition to said hearth; and
a side wall that is arranged so as to surround said heating unit to face said combustion passage and is composed of a high temperature heat storage material.

6. A system for thermally processing a waste, comprising:
a thermo-decomposition furnace with a waste receiving case that is capable of insertion and retraction; and
a combustion furnace that is configured so as to surround said thermo-decomposition furnace and that is provided with a burning unit with a fuel which is constituted by at least one of a fuel furnished from a fuel supply unit and a dry distilled gas furnished from said gas outlet,
characterized in that:
said combustion furnace is double structured, defining a spatial portion and a combustion passageway continuous to said spatial portion with a peripheral wall of said thermo-decomposition furnace and an intermediate wall and a diluting air passageway with said intermediate wall and an external wall;
said burning unit is disposed within said spatial portion;
a combustion air supply blower is connected to said burning unit;
said combustion passageway has a downstream side connected to an exhaust passageway; and
said diluting air passageway has an upstream side connected to a diluting air supply blower and has a communication with said spatial portion and said combustion passageway.

7. A system for thermally processing a waste, as set forth in claim 6, characterized in that said diluting air passageway and said combustion passageway has a portion of communication between them which is constituted of a multiplicity of vent holes.

8. A system for thermally processing a waste, as set forth in claim 1 or claim 6, characterized in that there is further provided a fuel supply amount control unit for reducing the amount of supply of said fuel from said fuel supply unit into said burning unit in accordance with the amount of said dry distilled gas that is generated.

9. A system for thermally processing a waste, as set forth in claim 1 or claim 6, characterized in that there is further provided a thermo-electric power generator that is disposed in said exhaust passageway for obtaining an electric power and warm water by utilizing a difference in temperature between the exhaust gas passing through said exhaust passageway and a coolant.

10. A system for thermally processing a waste, as set forth in claim 9, characterized in that there is further provided a power supply unit that is constituted by a power source with said electric power obtained by said thermo-electric power generator and that is connected to an electrical driving part and an electrical thermal source part of each of components which constitute said system for supplying therefrom an electric power to each of them.

11. A system for thermally processing a waste, as set forth in claim 1 or claim 6, characterized in that said burning unit is surrounded by said exhaust passageway.
